# EUROPÄISCHE PATENTANMELDUNG

(11) **EP 2 790 408 A1**
(43) Veröffentlichungstag der Anmeldung: **15.10.2014**
(21) Anmeldenummer: 13159763.5
(22) Anmeldetag: 18.03.2013
(51) Int. Cl.: H04N 19/132, H04N 19/167, H04N 19/182

(54) **Verfahren zur komprimierten Speicherung von grafischen Daten**

(71) Anmelder: VEGA Grieshaber KG, 77709 Wolfach (DE)
(72) Erfinder: Isenmann, Andreas, 77716 Haslach i.K. (DE)
(74) Vertreter: Maiwald Patentanwalts GmbH

(57) **Zusammenfassung**

Die Erfindung betrifft die Komprimierung von digitalen Bilddaten. Hierbei wird der gewünschte Detailgrad, also die Komprimierungsstufe für unterschiedliche Bildbereiche auf unterschiedliche Werte festgesetzt. Die Festsetzung des Detailgrads kann automatisch und/oder benutzergesteuert erfolgen. Hierdurch kann erreicht werden, dass interessantere Bildbereiche weniger oder gar nicht komprimiert werden, wohingegen weniger interessante Bildbereiche stark komprimiert werden.

## Beschreibung

### Gebiet der Erfindung

Die Erfindung betrifft die komprimierte Speicherung von grafischen Daten. Insbesondere betrifft die Erfindung ein Verfahren zur komprimierten Speicherung eines digitalen, aus einer Vielzahl an Pixeln aufgebauten Bildes, einen Prozessor zur Durchführung eines derartigen Verfahrens, eine Digitalkamera mit einem solchen Prozessor, ein Messgerät mit einem solchen Prozessor, ein Steuergerät mit einem solchen Prozessor, eine Verwendung, ein Programmelement sowie ein computerlesbares Medium.

### Hintergrund

Moderne Digitalkameras haben Sensoren, die eine hohe Auflösung besitzen und aus diesem Grunde in der Lage sind, detailreiche Bilder zu erzeugen. Dies hat allerdings zur Folge, dass das erzeugte digitale Bild einen großen Speicherplatzbedarf aufweist. Insbesondere wenn größere Mengen an Bildern über mehrere Jahre archiviert werden sollen, kann der große Speicherplatzbedarf zu einem Problem werden.

### Zusammenfassung der Erfindung

Es ist eine Aufgabe der Erfindung, den Speicherplatzbedarf für digitale Bilder zu reduzieren.

Gemäß einem ersten Aspekt der Erfindung ist ein Verfahren zur komprimierten Speicherung eines digitalen, aus einer Vielzahl an Pixeln aufgebauten Bildes unter Berücksichtigung eines über den Bildbereich sich ändernden gewünschten Detailgrades angegeben. Bei dem Verfahren wird zunächst ein gewünschter erster Detailgrad eines ersten Bildbereiches des digitalen Bildes bestimmt. Weiter wird ein gewünschter zweiter Detailgrad eines zweiten Bildbereiches des digitalen Bildes bestimmt, wobei sich der erste Detailgrad von dem zweiten Detailgrad unterscheidet. Daraufhin erfolgt eine Komprimierung des ersten Bildbereiches um einen ersten Faktor, der den ersten Detailgrad widerspiegelt. Ebenso erfolgt eine Komprimierung des zweiten Bildbereiches um einen zweiten Faktor, der den zweiten Detailgrad widerspiegelt.

In anderen Worten werden also der erste Bildbereich und der zweite Bildbereich um verschiedene Faktoren, also verschieden "stark" komprimiert, je nach gewünschtem Detailgrad.

Ist der gewünschte Detailgrad des ersten Bildbereiches hoch, so wird dieser erste Bildbereich nur geringfügig oder unter Umständen gar nicht komprimiert. Ist hingegen der gewünschte Detailgrad des zweiten Bildbereiches niedrig, beispielsweise weil sich der Benutzer nicht so sehr für den zweiten Bildbereich interessiert, so wird dieser zweite Bildbereich um einen hohen Faktor, also "stark" komprimiert.

Somit wird also zumindest ein Bildbereich des digitalen Bildes komprimiert gespeichert, wobei bestimmte, wichtige Bereiche des Bildes möglichst detailtreu gespeichert werden können, je nach gewünschter Detailtreue (Detailgrad) des entsprechenden Bereichs.

Es werden also unterschiedliche Auflösungen verwendet, um wichtige und weniger wichtige Bildbereiche zu speichern. Dadurch können die wichtigen Bereiche des Bildes gezielt sehr detailtreu erhalten bleiben.

Ein Kernaspekt der Erfindung besteht darin, dass das digitale Bild komprimiert wird, indem Bereiche von erhöhtem Benutzerinteresse ("wichtige Bereiche") hochaufgelöst und andere Bereiche ("weniger wichtige Bereiche") mit niedrigerer Auflösung gespeichert werden.

In der Prozessmesstechnik sind überwiegend Bussysteme mit niedrigen Übertragungsraten im Einsatz. Deshalb ist neben der Einsparung von Speicherplatz auch die Minimierung der Busbelastung durch das Übertragen komprimierter Bildinformationen von Vorteil.

Bei dem digitalen Bild kann es sich insbesondere um eine Messkurve handeln, die von einem Messgerät erfasst wurde, beispielsweise von einem Füllstandmessgerät. In diesem Fall kann es sich bei der Messkurve um eine Echokurve handeln.

Gemäß einer Ausführungsform der Erfindung wird für jedes Pixel des digitalen Bildes bestimmt, welchen Detailgrad der diesem Pixel entsprechende Bildbereich aufweisen soll.

Beispielsweise kann der Benutzer einen bestimmten Bildbereich (und somit eine bestimmte Gruppe von Pixeln) auswählen und diesen Bildbereich den von ihm gewünschten Detailgrad zuweisen. Im einfachsten Fall kann es lediglich zwei Detailgrade geben: hochauflösend und niedrigauflösend. Interessiert sich der Benutzer für den ausgewählten Bildbereich, kann er diesem den Detailgrad "hochauflösend" zuweisen. Daraufhin kann er beispielsweise einen weiteren Bereich auswählen und auch diesem den Detailgrad "hochauflösend" zuweisen, etc. Die verbleibenden Bildbereiche können dann vom System automatisch als "niedrigauflösend" klassifiziert werden.

Auch der umgekehrte Fall ist möglich: Der Benutzer wählt einen Bildbereich aus und klassifiziert ihn als "niedrigauflösend". Daraufhin kann er weitere Bildbereiche auswählen und diese als "niedrigauflösend" klassifizieren. Das System weist dann den verbleibenden Bildbereichen einen hohen Detailgrad zu ("hochauflösend").

Daraufhin erfolgt die Komprimierung der digitalen Bilddaten, wobei die als hochauflösend klassifizierten Bildbereiche um einen niedrigen Faktor oder gar nicht komprimiert werden, und wobei die als niedrigauflösend klassifizierten Bildbereiche um einen hohen Faktor komprimiert werden.

Hierbei ist es möglich, dass in dem digitalen Datensatz zu jedem Pixel der gewünschte Detailgrad des digitalen Bildes gespeichert wird.

Es ist auch möglich, dass benachbarte Pixel zu einer Pixelgruppe zusammengefasst werden und im digitalen Datensatz hinterlegt wird, welchen Detailgrad diese Pixelgruppe aufweisen soll.

Gemäß einer Ausführungsform der Erfindung wird der gewünschte erste und/oder zweite Detailgrad aus den Einstellungen einer Kamera bei Aufnahme des digitalen Bildes bestimmt.

Beispielsweise ist aus den Einstellungen der Kamera bei Aufnahme des digitalen Bildes zu erkennen, in welchem Bildbereich die Kamera scharf gestellt hat. Dieser Bildbereich kann dann vom System automatisch als ein Bildbereich mit einem gewünschten hohen Detailgrad klassifiziert werden.

Auch ist es möglich, dass das Programm, welches das Verfahren durchführt, eine Bildanalyse vornimmt und beispielsweise Gegenstände und/oder Personen erkennt und die damit zusammenhängenden Bildbereiche als Bereiche mit hohem Detailgrad klassifiziert.

Gemäß einer weiteren Ausführungsform der Erfindung wird der gewünschte erste und/oder zweite Detailgrad vom Benutzer vor der Aufnahme des digitalen Bildes bestimmt. Auch können die Detailgrade vom Benutzer nach der Aufnahme des digitalen Bildes bestimmt werden.

So ist es beispielsweise möglich, dass der Benutzer mit dem Sucher seiner Kamera durch gezieltes Richten der Kamera auf die wichtigen Bildbereiche und unter Zuhilfenahme des Auslöseknopfes oder einer anderen Taste diese als "hochauflösend" markiert.

Auch ist es möglich, dass sich der Benutzer das digitale Bild auf seiner Kamera oder am Computer nach dessen Aufzeichnung ansieht und über eine Auswahlfunktion die ihn interessierenden oder die ihn nicht so sehr interessierenden Bildbereiche markiert und deren Detailgrad festlegt.

Gemäß einem weiteren Aspekt der Erfindung können diese unterschiedlichen Verfahren zur Auswahl von Bildbereichen und zur Bestimmung der entsprechenden Detailgrade miteinander kombiniert werden. So ist es beispielsweise möglich, dass die Kamerasoftware bestimmte Bildbereiche selber bestimmt und klassifiziert und zusätzlich der Benutzer diese Klassifizierung korrigiert und/oder weitere Bildbereiche definiert und klassifiziert.

Gemäß einer weiteren Ausführungsform der Erfindung spiegelt der erste Komprimierungsfaktor nicht nur den ersten und der zweite Komprimierungsfaktor nicht nur den zweiten Detailgrad wider, sondern auch die Farben der die entsprechenden Pixel des Bildbereiches umgebenden Pixel. Die Komprimierung wird also umso stärker, je mehr Pixel gleicher Farbe benachbart zueinander angeordnet sind.

Gemäß einem weiteren Aspekt der Erfindung ist ein Prozessor zur Durchführung des oben und im Folgenden beschriebenen Verfahrens angegeben.

Gemäß einem weiteren Aspekt der Erfindung ist eine Digitalkamera mit einem solchen Prozessor angegeben.

Gemäß einem weiteren Aspekt der Erfindung ist ein Messgerät mit einem solchen Prozessor angegeben. Bei dem Messgerät kann es sich insbesondere um ein Füllstandmessgerät, ein Durchflussmessgerät oder ein Druckmessgerät handeln.

Gemäß einem weiteren Aspekt der Erfindung ist ein Steuergerät der Prozessmesstechnik mit einem solchen Prozessor angegeben. Bei dem Steuergerät handelt es sich beispielsweise um ein Steuergerät eines Füllstandmessgerätes, eine Druckmessgerätes oder eines Durchflussmessgerätes, das über einen Datenbus oder eine drahtlose Kommunikationsverbindung mit dem Messgerät verbunden ist, um Messdaten von dem Messgerät zu empfangen und das Messgerät zu Parametrieren.

Insbesondere kann es sich bei dem Steuergerät um ein modulares Auswerte- und Bediengeräts handeln, das auf ein Messgerät aufgesteckt werden kann. Im Bereich der Füllstandmessung kann das Steuergerät in der Art eines PLICSCOM-Gerätes ausgeführt sein.

Der Prozessor kann ganz allgemein zur digitalen Bildverarbeitung ausgeführt sein und neben der Anwendung in einer Kamera auch für die Anwendung in anderen Systemen verwendet werden. Beispielsweise für die komprimierte Speicherung von digitalen Röntgenbildern in der Medizintechnik oder für Bilder von Messkurven, die von Sensoren, z.B. im Bereich der Füllstandmessung aufgezeichnet wurden.

Das Verfahren kann, wie weiter oben ausgeführt, auch eingesetzt werden, um Bilder der Bedienerführung für Geräte der Messtechnik zu komprimieren.

Gemäß einem weiteren Aspekt der Erfindung ist die Verwendung eines oben und im Folgenden beschriebenen Verfahrens zur Komprimierung von Bildern der Benutzerführung im Bereich der Füllstandmessung angegeben.

Gemäß einem weiteren Aspekt der Erfindung ist die Verwendung eines oben und im Folgenden beschriebenen Verfahrens zur Komprimierung von Bildern von Messkurven im Bereich der Füllstandmessung angegeben.

Gemäß einem weiteren Aspekt der Erfindung ist ein Programmelement angegeben, das, wenn es auf einem Prozessor ausgeführt wird, den Prozessor anleitet, das oben und im Folgenden beschriebene Verfahren auszuführen.

Gemäß einem weiteren Aspekt der Erfindung ist ein computerlesbares Medium angegeben, auf dem ein Programmelement gespeichert ist, das, wenn es auf einem Prozessor ausgeführt wird, den Prozessor anleitet, das oben und im Folgenden beschriebene Verfahren auszuführen.

Dabei kann das Programmelement zum Beispiel Teil einer Software sein, die auf einem Prozessor gespeichert ist. Weiterhin umfasst diese Ausführungsform ein Computerprogrammelement, welches schon von Anfang an die Erfindung verwendet, sowie auch ein Computerprogrammelement, welches durch eine Aktualisierung (Update) ein bestehendes Programm zur Verwendung der Erfindung veranlasst.

Im Folgenden werden mit Verweis auf die Figuren Ausführungsbeispiele der Erfindung beschrieben.

### Kurze Beschreibung der Figuren

Fig. 1 zeigt ein Bild mit 11 x 10 Pixel.
Fig. 2 zeigt das Bild der Fig. 1 mit einem ausgewählten Bildbereich.
Fig. 3 zeigt ein Beispiel für eine zweistufige Komprimierung dieses Bildes.
Fig. 4 zeigt ein Beispiel für eine höherstufige Komprimierung des Bildes.
Fig. 5 zeigt eine Digitalkamera und ein Füllstandmessgerät mit jeweils einem Prozessor gemäß einem Ausführungsbeispiel der Erfindung.

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

### Detaillierte Beschreibung von Ausführungsbeispielen

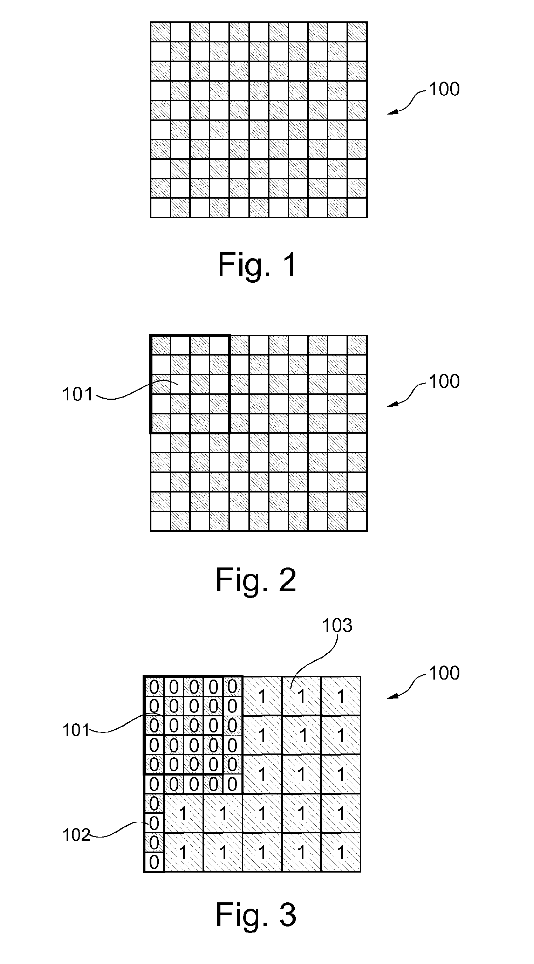

Fig. 1 zeigt ein Bild, das aus 11 x 10 Pixel zusammengesetzt ist. Die Farbtiefe des Bildes beträgt beispielsweise 8 Bit. Der Speicherbedarf zur Speicherung des digitalen Bildes auf einem Speichermedium beläuft sich somit auf 110 x 3 Byte (RGB) = 330 Byte.

Das Bild kann nun in einem bestimmten Dateiformat in komprimierter Form abgespeichert werden. Hierbei wird zwischen verlustfreien und verlustbehafteten Komprimierungsverfahren unterschieden. Beispielsweise erfolgt die Komprimierung anhand gleicher oder ähnlich eingefärbter, benachbarter Pixel.

Wenn ein digitales Bild von der Kamera erzeugt wird, so wählt der Fotograf beispielsweise eine Stelle im Bild aus, die fokussiert werden soll. Hier soll die Schärfe liegen und in diesem Bereich wird im digitalen Bild die maximale Detailinformation gewünscht. Die anderen Bildbereiche vom Bild, die außerhalb dieser Entfernung liegen, werden beispielsweise nicht in dieser Detailtreue abgespeichert.

Auch bei der Erzeugung von Bildern mit einer Software kann es vorkommen, dass Teile des zu erzeugenden Bildes möglichst detailtreu erhalten werden sollen und andere Bereiche unter Umständen nicht so detailtreu zu speichern sind. Eine solche Bearbeitungssoftware kann die Möglichkeit zur Festlegung von Bildbereichen mit erforderlicher Detailtreue zur Verfügung stellen.

Die Auflösung des komprimierten digitalen Bildes (Pixel je Inch) kann über den gesamten Bildbereich variiert werden und die gewünschte Auflösung (detailtreu) kann vor der Komprimierung automatisch von der Software und/oder Benutzer gesteuert für jeden einzelnen Bildbereich festgelegt werden. Hierzu wird für jeden Pixel nicht nur dessen Farbwert, sondern auch dessen aktuelle und/oder gewünschte Detailtreue in diesem Bildbereich gespeichert.

Diese Informationen können dann dazu genutzt werden, die unscharfen oder weniger wichtigen Bildbereiche mit niedrigerer Auflösung und die scharfen oder wichtigeren Bildbereiche mit höherer Auflösung abzuspeichern.

Fig. 2 zeigt das digitale Bild der Fig. 1, wobei der obere, linke Bereich 101, der 4 x 5 Pixel umfasst, ausgewählt ist. Der Bereich 101 des digitalen Bildes 100 soll detailreicher erhalten bleiben, als der restliche Bereich des Bildes. In anderen Worten wird für den Bereich 10 ein hoher Detailgrad festgesetzt, und für den Restbereich ein niedrigerer Detailgrad.

Fig. 3 zeigt ein Beispiel für eine zweistufige Komprimierung der digitalen Bilddaten. Zu jedem Pixel wird gespeichert, ob es hochauflösend (0) sein soll oder nicht (1). Hierfür wird ein zusätzliches Speicherbit benötigt. Bei der Komprimierung muss der ursprünglich definierte wichtige Bildbereich 101 an den Grenzen unter Umständen erweitert werden, um auf "ganze Vielfache" zu kommen (siehe Bereich 102). Dies ist erforderlich, damit es an der Grenze des hochaufgelösten Bereiches zu keinen Lücken oder Überschneidungen der Bildinformation kommt.

Da der Bildbereich 103 als Bildbereich mit geringem Detailgrad festgelegt wurde, ist hier die Anzahl der Pixel auf ein Viertel reduziert. Der Speicherbedarf beträgt nunmehr noch 53 x (3 Byte (RGB) + 1 Bit für die Detailgradinformation) - 166 Byte.

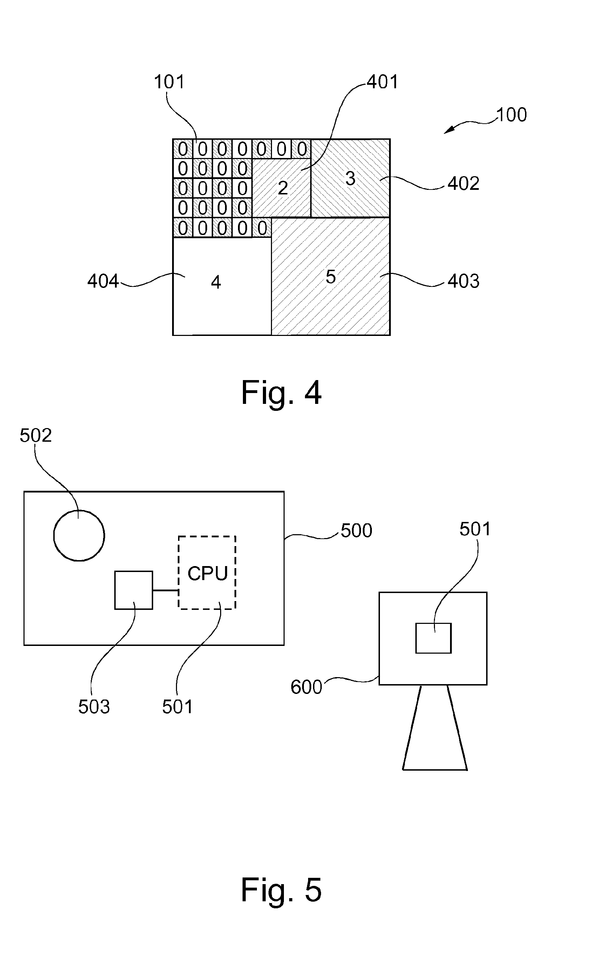

Fig. 4 zeigt ein Beispiel einer mehrstufigen Komprimierung, bei der sechs unterschiedliche Detailgrade vorgesehen sind. Natürlich können auch weniger oder mehr Detailgrade vorgesehen sein. Im Bereich 101 (dem Bereich mit dem höchsten Detailgrad) werden die Bilddaten nicht komprimiert. Im Bereich 401 werden 9 Pixel zu 1 Pixel zusammengefasst. Im Bereich 402 werden 16 Pixel zu 1 Pixel zusammengefasst. Im Bereich 404 werden 25 Pixel zu 1 Pixel zusammengefasst und im Bereich 403 werden 36 Pixel zu 1 Pixel zusammengefasst.

Auch hier wird zu jedem Pixel die Auflösung gespeichert. Die Anzahl der hierfür benötigten Bits hängt von der Anzahl der gewünschten Auslösungsstufen ab. Im Beispiel der Fig. 4 werden sechs Auflösungsstufen (Detailgrade) verwendet (wobei die Stufe 1 keinem Bildbereich zugeordnet wurde). Dafür sind 3 Bit erforderlich.

Insgesamt bleiben somit 28 Pixel übrig. Der Speicherbedarf beträgt somit 28 x (3 Byte (RGB) + 3 Bit für die sechs Auflösungsstufen) = 95 Byte.

Die dargestellten komprimierten Bilder sind nur beispielhaft zu sehen. Zum Bestimmen der optimalen Komprimierung kann ein entsprechender Algorithmus eingesetzt werden, der unter Betrachtung unterschiedlicher Auflösungsstufen die Anzahl verbleibender Quadrate und den sich daraus ergebenden Gesamtspeicherbedarf ermittelt.

Fig. 5 zeigt eine Kamera 500 mit einem Prozessor 501 und einem Objektiv 502. Die Kamera zeichnet ein digitales Bild auf und der Prozessor nimmt die Bearbeitung des digitalen Bildes vor. Das durch die Bearbeitung komprimierte Bild kann dann auf einer Speichereinrichtung 503 abgespeichert werden.

Bei der Kamera 500 kann es sich um eine digitale Fotokamera handeln, oder aber auch um einen Röntgendetektor mit entsprechender Bildverarbeitungselektronik, der für medizinische oder technische Untersuchungen eingesetzt wird.

Weiter ist ein Füllstandmessgerät 600 gezeigt, das einen oben beschriebenen Prozessor 501 aufweist. Der Prozessor kann beispielsweise das Bild der Messkurve komprimieren, bevor die Bilddaten an ein Steuergerät geschickt werden. Auch ist es möglich, dass der Prozessor das Bild für eine Benutzerführung, welches auf einem Display eines Auswerte- und Bediengeräts oder eines PCs dargestellt werden soll, komprimiert.

Ergänzend sei darauf hingewiesen, dass "umfassend" und "aufweisend" keine anderen Elemente oder Schritte ausschließt, und "eine" oder "ein" keine Vielzahl ausschließt. Ferner soi darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zur komprimierten Speicherung eines digitalen, aus einer Vielzahl an Pixeln aufgebauten Bildes unter Berücksichtigung eines über den Bildbereich sich ändernden gewünschten Detailgrades, aufweisend die Schritte:
Bestimmen eines gewünschten ersten Detailgrades eines ersten Bildbereiches des digitalen Bildes;
Bestimmen eines gewünschten zweiten Detailgrades eines zweiten Bildbereiches des digitalen Bildes, wobei sich der erste Detailgrad von dem zweiten Detailgrad unterscheidet;
Komprimieren des ersten Bildbereiches um einen ersten Faktor, der den ersten Detailgrad widerspiegelt; und
Komprimieren des zweiten Bildbereiches um einen zweiten Faktor, der den zweiten Detailgrad widerspiegelt.

2. Verfahren nach Anspruch 1, wobei für jeden Pixel des digitalen Bildes bestimmt wird, welchen Detailgrad der diesem Pixel entsprechende Bildbereich aufweisen soll.

3. Verfahren nach einem der vorhergehenden Ansprüche, wobei der gewünschte Detailgrad zu jedem Pixel des digitalen Bildes gespeichert wird.

4. Verfahren nach einem der vorhergehenden Ansprüche, wobei der gewünschte erste oder zweite Detailgrad aus den Einstellungen einer Kamera bei Aufnahme des digitalen Bildes oder aus den Einstellungen eines Messgerätes bei der Erfassung und/oder der Bearbeitung der von dem Messgerät aufgezeichneten Messdaten bestimmt wird.

5. Verfahren nach einem der vorhergehenden Ansprüche, wobei der gewünschte erste oder zweite Detailgrad vom Benutzer vor der Aufnahme des digitalen Bildes bestimmt wird.

6. Verfahren nach einem der vorhergehenden Ansprüche, wobei der gewünschte erste oder zweite Detailgrad vom Benutzer nach der Aufnahme des digitalen Bildes bestimmt wird.

7. Verfahren nach einem der vorhergehenden Ansprüche, wobei der erste und der zweite Komprimierungsfaktor nicht nur den ersten beziehungsweise den zweiten Detailgrad widerspiegeln, sondern auch die Farben der den entsprechenden Pixel des Bildbereiches umgebenden Pixel.

8. Prozessor zur Durchführung eines Verfahrens nach einem der Ansprüche 1 bis 7.

9. Messgerät mit einem Prozessor nach Anspruch 8.

10. Messgerät nach Anspruch 9, ausgebildet als Füllstandmessgerät, Durchflussmessgerät oder Druckmessgerät.

11. Steuergerät mit einem Prozessor nach Anspruch 8.

12. Verwendung eines Verfahrens nach einem der Ansprüche 1 bis 7 zur Komprimierung von Bildern der Benutzerführung im Bereich der Füllstandmessung.

13. Verwendung eines Verfahrens nach einem der Ansprüche 1 bis 7 zur Komprimierung von Bildern von Messkurven im Bereich der Füllstandmessung.

14. Programmelement, das, wenn es auf einem Prozessor ausgeführt wird, den Prozessor anleitet, das Verfahren nach einem der Ansprüche 1 bis 7 auszuführen.

15. Computerlesbares Medium, auf dem ein Programmelement gespeichert ist, das, wenn es auf einem Prozessor ausgeführt wird, den Prozessor anleitet, das Verfahren nach einem der Ansprüche 1 bis 7 auszuführen.

## Geänderte Patentansprüche

### Geänderte Patentansprüche gemäss Regel 137(2) EPÜ.

**1.** Füllstandmessgerät, Durchflussmessgerät oder Druckmessgerät mit einem Prozessor zur Durchführung eines Verfahrens zur komprimierten Speicherung eines digitalen, aus einer Vielzahl an Pixeln aufgebauten Bildes unter Berücksichtigung eines über den Bildbereich sich ändernden gewünschten Detailgrades, aufweisend die Schritte:
Bestimmen eines gewünschten ersten Detailgrades eines ersten Bildbereiches des digitalen Bildes;
Bestimmen eines gewünschten zweiten Detailgrades eines zweiten Bildbereiches des digitalen Bildes, wobei sich der erste Detailgrad von dem zweiten Detailgrad unterscheidet;
Komprimieren des ersten Bildbereiches um einen ersten Faktor, der den ersten Detailgrad widerspiegelt; und
Komprimieren des zweiten Bildbereiches um einen zweiten Faktor, der den zweiten Detailgrad widerspiegelt;
wobei der gewünschte erste oder zweite Detailgrad aus den Einstellungen des Messgeräts bei der Erfassung und/oder der Bearbeitung der von dem Messgerät aufgezeichneten Messdaten bestimmt wird.

**2.** Messgerät nach Anspruch 1, wobei für jeden Pixel des digitalen Bildes bestimmt wird, welchen Detailgrad der diesem Pixel entsprechende Bildbereich aufweisen soll.

**3.** Messgerät nach einem der vorhergehenden Ansprüche, wobei der gewünschte Detailgrad zu jedem Pixel des digitalen Bildes gespeichert wird.

**4.** Messgerät nach einem der vorhergehenden Ansprüche, wobei der gewünschte erste oder zweite Detailgrad vom Benutzer vor der Aufnahme des digitalen Bildes bestimmt wird.

**5.** Messgerät nach einem der vorhergehenden Ansprüche, wobei der gewünschte erste oder zweite Detailgrad vom Benutzer nach der Aufnahme des digitalen Bildes bestimmt wird.

**6.** Messgerät nach einem der vorhergehenden Ansprüche, wobei der erste und der zweite Komprimierungsfaktor nicht nur den ersten beziehungsweise den zweiten Detailgrad widerspiegeln, sondern auch die Farben der den entsprechenden Pixel des Bildbereiches umgebenden Pixel.

**7.** Messgerät nach einem der Ansprüche 1 bis 6, ausgeführt als Füllstandmessgerät zur Komprimierung von Bildern der Benutzerführung im Bereich der Füllstandmessung.

**8.** Messgerät nach einem der Ansprüche 1 bis 6 ausgeführt als Füllstandmessgerät zur Komprimierung von Bildern von Messkurven im Bereich der Füllstandmessung.
